**Europäisches Patentamt**

**European Patent Office**

**Office européen des brevets**

(19)

(11) Publication number : **0 143 837 B2**

(12) # NEW EUROPEAN PATENT SPECIFICATION

(45) Date of publication of the new patent specification : **05.08.92 Bulletin 92/32**

(51) Int. Cl.$^5$ : **G01N 15/08**

(21) Application number : **84902209.0**

(22) Date of filing : **17.05.84**

(86) International application number :
**PCT/GB84/00170**

(87) International publication number :
**WO 84/04593 22.11.84 Gazette 84/27**

(54) **POROSIMETER AND METHODS OF ASSESSING POROSITY.**

The file contains technical information submitted after the application was filed and not included in this specification

(30) Priority : **17.05.83 GB 8313635**

(43) Date of publication of application :
**12.06.85 Bulletin 85/24**

(45) Publication of the grant of the patent :
**04.01.89 Bulletin 89/01**

(45) Mention of the opposition decision :
**05.08.92 Bulletin 92/32**

(84) Designated Contracting States :
**DE FR GB**

(56) References cited :
**EP-A- 0 064 159**

(56) References cited :
**DE-B- 1 063 832**
**DE-U- 8 212 094**
**GB-A- 2 018 436**
**GB-A- 2 084 741**
**Messtechnik, vol. 76, no. 12, December 1968.**
**W.FISCHER et al.: " Eine Methode zur Ermittlung der Porengrössenverteilung"**
**ASTM F 316-80**

(73) Proprietor : **COULTER ELECTRONICS, LIMITED**
**Northwell Drive**
**Luton Bedfordshire LU3 3RH (GB)**

(72) Inventor : **STORR, Bernard**
**172 Robin Hood Lane Chatham**
**Kent ME5 9LA (GB)**

(74) Representative : **Crawford, Andrew Birkby et al**
**A.A. THORNTON & CO. Northumberland House 303-306 High Holborn**
**London WC1V 7LE (GB)**

Jouve, 18, rue Saint-Denis, 75001 PARIS

## Description

This invention relates to porosimeters and to methods of assessing pore size characteristics such as pore size distribution.

One method of determining maximum pore size of a sample is disclosed in EP-A-0 064 159 which describes a device for testing filters by determining the "bubble point" of the filter. In this known device a filter, pre-wetted with water, is mounted in a holder having an inlet connected to a source of compressed gas. By increasing the gas pressure applied to the filter until no corresponding increase in measured pressure is discernable it is known that the "bubble point" has been reached. A pressure sensor is connected to the inlet line to measure applied pressure and by plotting the reading from the pressure sensor against time it is possible to note the "bubble point" and to determine the maximum pore size.

A widely accepted standard apparatus and method for assessing pore size is to be seen in ASTM F 316-80. This standard apparatus comprises a gas pressure regulator arranged to be connected to receive a gas supply; a sample holder having an inlet and an outlet, said inlet being connected to said gas pressure regulator to receive gas therethrough, said sample holder being constructed to hold a pre-saturated sample; a gas pressure sensor connected to said sample holder upstream of the sample for measuring the pressure of gas upstream of the sample, and a gas flow sensor for measuring gas flow through the sample.

The standard method comprises the steps of performing a wet run and a dry run; the wet run comprising the steps of saturating a sample with liquid, placing the sample in a sample holder of a pore size characterising machine, supplying gas to the sample holder, measuring the flow of gas through the sample using a sensor, measuring the gas pressure across the sample using a further sensor and increasing the pressure of gas until the sample is substantially free of said liquid; and the dry run comprising the steps of with a non-pre-saturated sample in the sample holder of the pore size characterising machine supplying gas to the sample holder, measuring the flow of gas pressure across the sample using the further sensor and increasing the pressure of gas.

The object of this test is to gain information about the maximum pore size and the distribution of pore sizes in a porous material under test. The material is saturated with test liquid, held in a holder and subject to progressively increasing pressure of a test gas. The initial breakthrough of gas through the wet filter is noted by a bubble point detector and thereafter the relationship between pressure applied and flow through the material is observed using a pressure gauge and a rotameter downstream of the material and directly impelled by the flow of gas.

This test method is highly dependent on the manual skill and dexterity and the intellectual ability of the operator requiring as it does the simultaneous operation of the inlet pressure regulator and observation of the pressure gauge and the flow rate. Thereafter these readings have to be converted manually by drawing graphs and these are then interpreted.

Despite these drawbacks this method is one of the accepted methods of testing pore size characteristics.

A further method and apparatus has been proposed, in "Messtechnik" Vol. 76, No. 12, Dec. 1968 p. 309-313, for determining pore size distribution in a sample dependent on the volume of the pores and the total pore volume. In this known apparatus a porous sample is located in a housing separating the housing into two parts, one containing a reservoir of measuring liquid and the other part being connected to a gas supply. A microporous auxiliary layer is provided between the sample and the measuring liquid in order to prevent the flow of gas through the sample into the measuring liquid.

Pore size distribution is determined using this apparatus by pre-wetting the sample with the measuring liquid (which may be water, acetone or methanol) and then increasing the gas pressure applied to the sample so as to eject liquid from pores in the sample thereby altering the level of the measuring liquid. A manometer is used to measure applied gas pressure so as to enable a volume-pressure curve to be plotted.

We have examined the prior art tests and have in the present invention provided substantial improvements in various respects and in particular from the point of view of avoiding reliance upon manual skill.

The present invention provides a pore size characterising device comprising: a gas pressure regulator arranged to be connected to receive a gas supply; a sample holder having an inlet and an outlet, said inlet being connected to said gas pressure regulator to receive gas therethrough, said sample holder being constructed to hold a pre-saturated sample; a gas pressure sensor connected to said sample holder upstream of the sample for measuring the pressure of gas across the sample, and a gas flow sensor for measuring gas flow through the sample, characterised in that the gas flow sensor is connected upstream of the sample and the device further comprises processing means responsive to said gas pressure and gas flow sensors for determining pore size characteristics of the sample, wherein the sample is pre-saturated with a liquid having a low surface tension and a low vapour pressure.

The present invention further provides a method of assessing pore size characteristics, comprising the steps of performing a wet run and a dry run; the wet run comprising the steps of saturating a sample with a liquid, placing the sample in a sample holder of a pore size characterising machine, supplying gas to the sample holder, measuring the flow of gas through the sample using a sensor, measuring the gas pressure across the sample using a further sensor and increasing the pressure of gas until the sample is substantially free of said liquid; and the dry run comprising the steps of with a non-pre-saturated sample in the sample holder of the pore size characterising machine supplying gas to the sample holder, measuring the flow of gas through the sample using the sensor, measuring the gas pressure across the sample using the further sensor and increasing the pressure of gas; characterised in that the method further comprises the steps of in the wet and dry runs measuring the gas pressure difference across the sample and the flow of gas therethrough using sensors placed upstream of the sample, using processing means responsive to said sensors to determine pore size characteristics and in that said liquid has a low surface tension and a low vapour pressure.

In our apparatus and method we use a pressure gauge and flow meter only in an initial calibration which need not be done in the presence of the material to be tested. We further site our flow-rate sensor upstream of the material to be tested. In operation, we take both pressure and flow-rate readings directly from the respective sensors. These can be fed directly into an automatic recorder which draws mechanically the output in the form of a graph, or to an integrating computer. Pore size characteristics are then computed and can be presented in a number of ways.

The siting of the flow-rate sensor upstream of the material to be tested is of great importance since the positioning avoids any contamination of that sensor by the test liquid being swept from the material. In the American Standard method, a liquid trap is provided behind or downstream of the material but will not prevent vapour and is not totally successful in preventing access of liquid into the subsequent stages of the apparatus which therefore can affect the accuracy of the flow meter.

We further improve the process by standardising the test liquid. Those mentioned in the American Standard are water, petroleum distillate, denatured alcohol or mineral oil. We find that various characteristics of volatility, surface tension or reactivity will not allow any one of those material to be used over a wide range of materials to be tested. We have selected a liquid which is of the widest possible applicability, having very low surface tension and vapour pressure and in particular very low reactivity for the materials which are likely to form the materials under test. An example of such a material is known as Fluorinert (Registered Trade Mark) which is recommended by its makers Minnesota Mining and Manufacturing as a cooling liquid for electronic components and devices. The preferred Fluorinert liquid is known as FC43 having a nominal boiling point of 174°C, a viscosity of 2.6 cs, a vapour pressure at 25°C of 1.3 mmHg and a surface tension at the same temperature of 16 dynes per cm. Chemically, the liquid is a clear colourless perfluorocarbon fluid.

To relieve the operator further of the need for manual intervention we may provide a motorised drive for the inlet flow regulator whereby to achieve a known increase of pressure applied to the sample at a predetermined rate or at a rate which could be determined by the nature of the test material, at least within a certain range of pore sizes.

In our method, it is preferred to take the wet curve first in a single sample holder and then repeat the run with the same sample in the same place to obtain the "dry" curve. In this way it is certain that an identical sample is giving the two sets of data (a comparison between which gives the necessary results) and that no contamination or the like will enter the system as a result of its being opened up between the test. The ASTM method assumes that the dry test will be taken first or else that two samples will be in the system.

The method of the invention may also include a calibration step performed before subjecting the sample to the test and which consists in running the gas through the system and calibrating the pressure detection system of the recorder against a pressure gauge coupled into the line and calibrating the flow rate detection system against a flow meter coupled into the line. The calibration may include the steps of returning the pressure and flow back to zero and recalibrating the zero of the pressure detection system, for as often as is necessary. However, neither the pressure gauge nor the flow meter will be used in normal operation during running of the tests. In the accompanying drawings:

Figure 1 is a diagrammatic view taken from ASTM F316-80 of the test apparatus as recommended and used until the present invention; and

Figure 2 is a similar diagram of the apparatus according to the present invention; and

Figure 3 is a sketch perspective view of the apparatus as mounted for use.

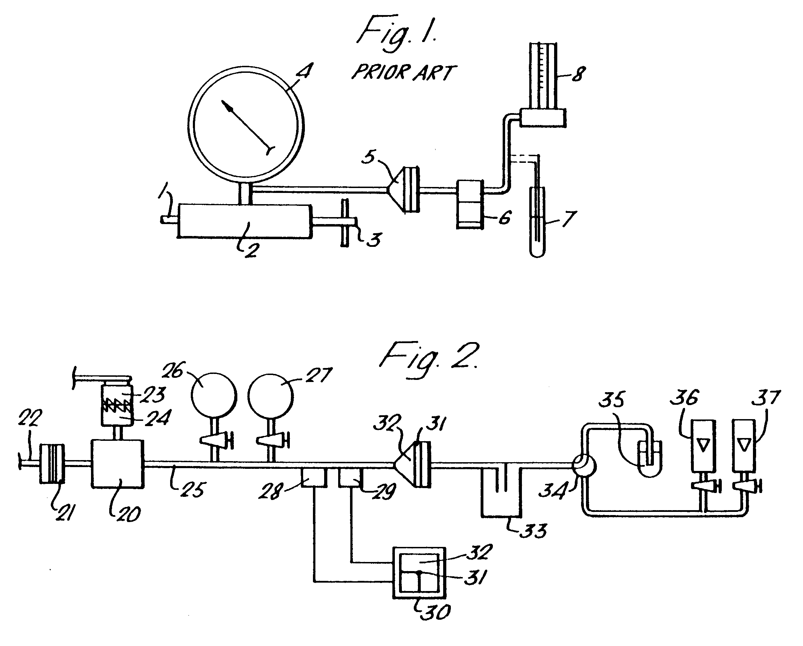

Figure 1 shows a pressure source 1 with a pressure regulator 2 operated by a manual control 3. The pressure output from the regulator is seen on a gauge 4 and passes to a sample holder 5 between the two parts of which a sample is mounted, the sample having been moistened by any one of water, petroleum distillate, de-natured alcohol or mineral oil, all of a specified characteristics. Following the passage of gas through the sample is an oil trap 6 and the duct is initially coupled up after that to a so-called bubble point detector 7, wherein output if any being caused to bubble through liquid or to a rotameter 8 which is directly impelled by the flow of liquid. The initial breakthrough of gas through the sample is noted by observation of the bubble point detector which sets a zero for a graph which is then drawn by manual correlation of the pressure gauge against the flow rate downstream of the sample as measured by the rotameter 8.

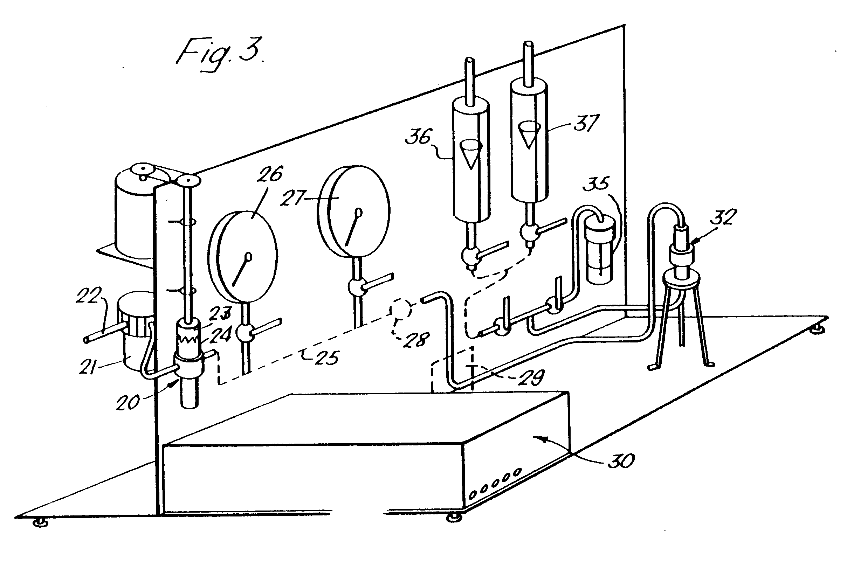

In the present invention in contrast, as seen in Figures 2 and 3, a pressure regulator 20 such as a Schrader regulator preceded by a filter 21 between it and a source of compressed gas 22, usually compressed air is driven from a synchronous motor (not shown) through belting or other drive train and a ratchet clutch 23. It can be returned to zero by manual intervention on the part 24 of the clutch nearer to the regulator 20. Next in the line 25 leading from the regulator are two pressure gauges 26, 27 which can be brought into communication with the line through respective valves.

The pressure gauges are used for calibration only and they are sensitive in different ranges of pressure, only one being used for any given calibration. Next in the line are transducers 28, 29 for pressure and flow-rate respectively. The pressure transducer may be of any known type but we have used one of the stressed metal film (also known as bonded foil strain gauge) type which gives an output to an X Y recorder 30 having a pen drivable over graph paper in either or both of the X Y directions in accordance with respective inputs. The other input is derived from a flow-rate transducer 29 and we prefer to use a thermal mass flow meter since it is devoid of moving parts. It can be seen that these devices are sensing both pressure and flow-rate in the ducting upstream of the sample 31 which is mounted in a standard holder 32 and which optionally may be followed by the standard liquid trap 35 and by a two-way valve 3-4 which can divert flow either to a standard bubble point detector 35 or to standard flow meters 36, 37. Which of these two is connected to the line is selected by respective valves. The flow meters 36, 37 which are of the type which is impelled by the flow of gas are used only in calibration of the device. The bubble point detector is however used to manually note the initial point of the breakthrough of the gas at which time a tick or similar mark is made manually on the graph paper in the recorder 30 as a safeguard for extra accuracy in determining the origin of the curve which will be obtained.

In operation, calibration is first carried out without a sample in the holder. Gas is run through the system at a pressure similar to the maximum which will be expected to be used in the following test. One or other of the pressure gauges 26, 27 is selected and the output from pressure transducer 28 only is fed to the recorder 30. The correlation between the position of the pen and the reading on the pressure gauges made and if necessary the zeros are then calibrated, with recalibration at the high pressure and so on. Similarly, calibration of the flow-rate is carried out by taking the output from flow-rate transducer 29 only to the recorder and comparing the other reading of the pen with the reading achieved by one of the two direct-impelled flow meters 36 or 37 which may be appropriate to the expected maximum flow during the test. When calibration has been achieved the pressure gauges and the flow meters are switched out of the system.

The valve 34 is switched over so that the bubble detector is in the circuit, a standard sample which may be for example a filter paper, a sintered micro-filter, a blotting paper, a geological material or any other material of which it is wished to know the porosity, is saturated in Fluorinert FC43 and placed in the holder. The automatic drive 23 is coupled to the pressure regulator so there is and automatic and predetermined increase in the pressure applied to the sample and the test is run, achieving a wet curve graph. The test is continued until that line becomes substantially straight, showing substantially complete drying of the sample. The pressure is then returned to zero and the run repeated with the sample still in the holder to obtain the dry curve which is substantially a straight line. The two curves are plotted on the same piece of graph paper 32 automatically by the recorder 30 and are then removed for the necessary interpretation.

It is apparent that once the output signals have been reduced to an electrical form as they are here, they can be processed to interpret them in terms of pore size and distribution.

It can be seen that we have considerably improved and rendered more reliable the method and apparatus proposed in the ASTM method by removing very largely the reliance on manual dexterity and skill, by improving the circuitry shown in that ASTM method in order to increase the performance and reliability of the whole and by standardising our test liquid used to wet the material under test.

## Claims

1. A pore size characterising device comprising: a gas pressure regulator (20) arranged to be connected to receive a gas supply (22); a sample holder (32) having an inlet and an outlet, said inlet being connected to said gas pressure regulator to receive gas therethrough, said sample holder being constructed to hold a pre-saturated sample (31); a gas pressure sensor (28) connected to said sample holder upstream of the sample for measuring the pressure of gas across the sample, and a gas flow sensor (29) for measuring gas flow through the sample, characterised in that the gas flow sensor (29) is connected upstream of the sample and the device further comprises processing means responsive to said gas pressure and gas flow sensors for determining pore size characteristics of the sample, wherein the sample is pre-saturated with a liquid having a low surface tension and a low vapour pressure.

2. A device as claimed in claim 1, wherein said gas pressure regulator (20) is controlled automatically to regulate the pressure of the gas supplied to the sample holder inlet in a predetermined manner, whereby to provide a known pressure of gas across the sample (31) at a predetermined rate.

3. A device as claimed in claim 1 or 2, wherein gas pressure gauge means (26, 27) is provided to calibrate the output from said gas pressure sensor (28).

4. A device as claimed in any one of the preceding claims, wherein gas flow metering means (36, 37) is provided to calibrate the output from said gas flow sensor (29).

5. A device as claimed in claim 4, wherein said gas flow metering means (36, 37) is connected to the outlet of said sample holder (32).

6. A device as claimed in any one of the preceding claims, wherein said processing means includes a chart recorder (30).

7. A device as claimed in any one of the preceding claims, wherein the liquid used to saturate the sample (31) is an inert perflourocarbon fluid.

8. A device as claimed in claim 7, wherein the liquid used has a boiling point of 174°C, a viscosity of 0.026cm$^2$/s (2.6cs), a vapour pressure at 25°C of 173Pa (1.3mm Hg) and a surface tension at 25°C of 16mN/m (16 dynes per cm).

9. A method of assessing pre size characteristics, comprising the steps of performing a wet run and a dry run; the wet run comprising the steps of saturating a sample with a liquid, placing the sample in a sample holder of a pore size characterising machine, supplying gas to the sample holder, measuring the flow of gas through the sample using a sensor, measuring the gas pressure across the sample using a further sensor and increasing the pressure of gas until the sample is substantially free of said liquid; and the dry run comprising the steps of with a non-pre-saturated sample in the sample holder of the pore size characterising machine supplying gas to the sample holder, measuring the flow of gas through the sample using the sensor, measuring the gas pressure across the sample using the further sensor and increasing the pressure of gas; characterised in that the method further comprises the steps of in the wet and dry runs measuring the gas pressure difference across the sample and the flow of gas therethrough using sensors placed upstream of the sample, using processing means responsive to said sensors to determine pore size characteristics and in that said liquid has a low surface tension and a low vapour pressure.

10. A method as claimed in claim 9, wherein said wet run is performed before said dry run.

11. A method as claimed in claim 9 or 10, wherein prior to performing said steps, in the absence of any sample, gas is passed through the holder to calibrate said sensors using pressure gauge means and flow metering means.

12. A method as claimed in claim 11, wherein after calibrating said sensors, said pressure gauge means and said metering means are isolated from the flow.

13. A method as claimed in claims 9 to 12, wherein the liquid used to saturate the sample is an inert perflurocarbon fluid.

14. A method as claimed in claim 13, wherein the liquid used has a boiling point of 174°C, a viscosity of 0.026cm$^2$/s (2.6cs), a vapour pressure at 25°C of 173 Pa (1.3mm Hg) and a surface tension at 25°C of 16mN/m of (16 dynes per cm).

**Patentansprüche**

1. Porengrößenbestimmungsvorrichtung mit einer Gasdruckregelvorrichtung (20), die mit einer Gaszufuhr (22) verbunden ist; einem Probenhalter (32) mit einem Einlaß und einem Auslaß, wobei der Einlaß mit der Gasdruckregelvorrichtung zur Gaszufuhr verbunden ist und der Probenhalter zum Halten einer vorgesättigten Probe (31) ausgebildet ist; einem Gasdruckfühler (28), der mit dem Probenhalter oberhalb der Probe verbunden ist, um den Gasdruck der Probe zu messen, und einem Gasströmungsfühler (29) zum Messen der Gasströmung durch die Probe, dadurch gekennzeichnet, daß der Gasströmungsfühler (29) oberhalb der Probe vorgesehen ist und des weiteren zur Bestimmung der Porengrößencharakteristiken auf den Gasdruck- und Gasströmungsfühler ansprechende Verarbeitungseinrichtungen vorhanden sind, wobei die Probe mit einer Flüssigkeit mit einer niedrigen Oberflächenspannung und einem geringen Dampfdruck vorgesättigt ist.

2. Vorrichtung nach Anspruch 1, dadurch gekennzeichnet, daß die Gasdruckregelvorrichtung (20) automatisch gesteuert wird, um den Druck des dem Probenhaltereinlaß zugeführten Gases auf vorbestimmte Weise zu regeln, um dadurch einen bekannten Gasdruck für die Probe (31) mit einer vorbestimmten Geschwindigkeit vorzusehen.

3. Vorrichtung nach Anspruch 1 oder 2, gekennzeichnet durch eine Gasdruckmeßeinrichtung (26, 27) zur Kalibrierung des Ausgangs des Gasdruckfühlers (28).

4. Vorrichtung nach einem der vorhergehenden Ansprüche, gekennzeichnet durch eine Gasströmungsmeßeinrichtung (36, 37) zur Kalibrierung des Ausgangs des Gasströmungsfühlers (29).

5. Vorrichtung nach Anspruch 4, dadurch gekennzeichnet, daß die Gasströmungsmeßeinrichtung (36, 37) mit dem Auslaß des Probenhalters (32) verbunden ist.

6. Vorrichtung nach einem der vorhergehenden Ansprüche, dadurch gekennzeichnet, daß die Verarbeitungseinrichtung eine Registriervorrichtung (30) umfaßt.

7. Vorrichtung nach einem der vorhergehenden Ansprüche, dadurch gekennzeichnet, daß die zur Sättigung der Probe (31) verwendete Flüssigkeit eine inerte Perfluorkohlenstoffflüssigkeit ist.

8. Vorrichtung nach Anspruch 7, dadurch gekennzeichnet, daß die verwendete Flüssigkeit einen Siedepunkt von 174°C, eine Viskosität von 0,026 cm²/s (2,6 cs), einen Dampfdruck von 173 Pa (1,3 mm Hg) bei 25°C und eine Oberflächenspannung von 16 mN/m (16 Dyn pro cm) bei 25°C besitzt.

9. Verfahren zur Bestimmung von Porengrößencharakteristiken, bestehend aus folgenden Schritten: Durchführung eines Naßlauf und eines Trockenlaufs, wobei der Naßlauf folgende Schritte umfaßt: Sättigung einer Probe mit einer Flüssigkeit, Einbringung der Probe in einen Probenhalter einer Porengrößenbestimmungsvorrichtung, Zufuhr von Gas an den Probenhalter, Messen der Gasströmung durch die Probe unter Verwendung eines Fühlers, Messen des Gasdrucks in der Probe unter Verwendung eines weiteren Fühlers und Erhöhung des Gasdrucks bis die Probe im wesentlichen frei von der Flüssigkeit ist, wobei der Trockenlauf folgende Schritte umfaßt: Zufuhr von Gas an den Probenhalter mit einer nicht vorgesättigten Probe in dem Probenhalter der Porengrößenbestimmungsvorrichtung, Messen der Gasströmung durch die Probe unter Verwendung des Fühlers, Messen des Gasdrucks in der Probe unter Verwendung des weiteren Fühlers, und Erhöhung des Gasdrucks, dadurch gekennzeichnet, daß das Verfahren folgende Schritte umfaßt: Messen der Gasdruckdifferenz in der Probe und der Gasströmung durch die Probe im Naß- und Trockenlauf unter Verwendung von oberhalb der Probe angeordneten Fühlern, Verwendung von auf die Fühler ansprechenden Verarbeitungseinrichtungen zur Bestimmung der Porengrößencharakteristiken, und daß die Flüssigkeit eine niedrige Oberflächenspannung und einen geringen Dampfdruck aufweist.

10. Verfahren nach Anspruch 9, dadurch gekennzeichnet, daß der Naßlauf vor dem Trockenlauf durchgeführt wird.

11. Verfahren nach Anspruch 9 oder 10, dadurch gekennzeichnet, daß vor der Durchführung der genannten Schritte Gas durch den Probenhalter hindurchgeleitet wird, ohne daß sich eine Probe darin befindet, um die Fühler unter Verwendung einer Druckmeßeinrichtung und einer Strömungsmeßeinrichtung zu kalibrieren.

12. Verfahren nach Anspruch 11, dadurch gekennzeichnet, daß die Druckmeßeinrichtung und die Strömungsmeßeinrichtung nach erfolgter Kalibrierung der Fühler von der Strömung getrennt werden.

13. Verfahren nach Anspruch 9 bis 12, dadurch gekennzeichnet, daß die zur Sättigung der Probe verwendete Flüssigkeit eine inerte Perfluorkohlenstoffflüssigkeit ist.

14. Verfahren nach Anspruch 13, dadurch gekennzeichnet, daß die verwendete Flüssigkeit einen Siedepunkt von 174°C, eine Viskosität von 0,026 cm²/s (2,6 cs), einen Dampfdruck von 173 Pa (1,3 mm Hg) bei 25°C und eine Oberflächenspannung von 16 mN/m (16 Dyn pro cm) bei 25°C besitzt.

**Revendications**

1. Dispositif de caractérisation de la taille des pores comprenant : un régulateur de la pression de gaz (20) agencé pour être connecté pour recevoir une alimentation en gaz (22) ;un support de l'échantillon (32) ayant une entrée et une sortie, ladite entrée étant connectée audit régulateur de la pression de gaz pour être traversée du gaz, ledit support de l'échantillon étant construit pour contenir un échantillon présaturé (31) ; un capteur de la pression de gaz (28) connecté audit support de l'échantillon en amont de l'échantillon pour mesurer la pression du gaz à travers l'échantillon et un capteur de l'écoulement de gaz (29) pour mesurer l'écoulement de gaz à travers l'échantillon, caractérisé en ce que le capteur de l'écoulement de gaz (29) est connecté en amont de l'échantillon et le dispositif comprend de plus un moyen de traitement répondant auxdits capteurs de la pression de gaz et de l'écoulement de gaz pour déterminer les caractéristiques de taille des pores de l'échantillon, où l'échantillon est présaturé d'un liquide ayant une faible tension de surface et une faible pression de vapeur.

2. Dispositif selon la revendication 1, où ledit régulateur de la pression de gaz (20) est contrôlé automatiquement pour réguler la pression du gaz fourni à l'entrée du support de l'échantillon d'une manière prédéterminée, pour ainsi produire une pression connue de gaz à travers l'échantillon (31) à un débit prédéterminé.

3. Dispositif selon la revendication 1 ou 2, où un moyen formant jauge de pression de gaz (26,27) est prévu pour calibrer la sortie du capteur de pression de gaz (28).

4. Dispositif selon l'une quelconque des revendications précédentes, où un moyen de mesure de l'écoulement de gaz (36,37) est prévu pour calibrer la sortie dudit capteur de l'écoulement de gaz (29).

5. Dispositif selon la revendication 4, où le moyen de mesure de l'écoulement de gaz (36,37) est connecté à la sortie dudit support de l'échantillon (32).

6. Dispositif selon l'une quelconque des revendications précédentes, où ledit moyen de traitement comprend un enregistreur sur diagramme (30).

7. Dispositif selon l'une quelconque des revendications précédentes, où le liquide utilisé pour saturer l'échantillon (31) est un perfluorocarbone fluide inerte.

8. Dispositif selon la revendication 7, où le liquide utilisé a un point d'ébullition de 174°C, une viscosité de 0,026 cm²/s (2,6 cs), une pression de vapeur à 25°C de 173 pa (1,3 mmHg ) et une tension de surface à 25°C de 16 mN/m (16 dynes par cm).

9. Méthode de détermination des caractéristiques de taille des pores, comprenant les étapes d'accomplir un essai humide et un essai à sec; l'essai humide comprenant les étapes de saturer un échantillon d'un liquide, de placer l'échantillon dans un support de l'échantillon d'une machine de caractérisation de la taille des pores, de fournir du gaz au support de l'échantillon, de mesurer l'écoulement du gaz à travers l'échantillon en utilisant un capteur, de mesurer la pression du gaz à travers l'échantillon en utilisant un autre capteur et d'augmenter la pression du gaz jusqu'à ce que l'échantillon soit sensiblement exempt dudit liquide ; et l'essai à sec comprenant les étapes, avec un échantillon non présaturé dans le support de l'échantillon de la machine de caractérisation de la taille des pores, de fournir du gaz au support de l'échantillon, de mesurer l'écoulement du gaz à travers l'échantillon en utilisant le capteur, de mesurer la pression du gaz à travers l'échantillon en utilisant l'autre capteur et d'augmenter la pression du gaz ; caractérisée en ce que la méthode comprend de plus les étapes, dans les essais humide et à sec, de mesurer la différence de pression de gaz à travers l'échantillon et l'écoulement de gaz à travers lui en utilisant des capteurs placés en amont de l'échantillon, en utilisant un moyen de traitement répondant auxdits capteurs pour déterminer les caractéristiques de taille des pores et en ce que ledit liquide a une faible tension de surface et une faible pression de vapeur.

10. Méthode selon la revendication 9, où ledit essai humide est accompli avant ledit essai à sec.

11. Méthode selon la revendication 9 ou 10, où avant d'accomplir lesdites étapes, en l'absence de tout échantillon, on fait passer du gaz à travers le support pour calibrer lesdits capteurs en utilisant un moyen formant jauge de pression et un moyen de mesure de l'écoulement.

12. Méthode selon la revendication 11, où après calibrage desdits capteurs, ledit moyen formant jauge de pression et ledit moyen de mesure sont isolés de l'écoulement.

13. Méthode selon les revendications 9 à 12, où le liquide utilisé pour saturer l'échantillon est un perfluorocarbone fluide inerte.

14. Méthode selon la revendication 13, où le liquide utilisé a un point d'ébullition de 174°C, une viscosité de 0,026 cm²/s (2,6 cs), une pression de vapeur à 25°C de 173 pa (1,3 mmHg) et une tension de surface à 25°C de 16 mN/m (16 dynes par cm).

# Fig. 1.
## PRIOR ART

# Fig. 2.

EP 0 143 837 B2

Fig. 3.